# EUROPEAN PATENT APPLICATION

(11) **EP 3 961 977 A1**
(43) Date of publication of application: **02.03.2022**
(21) Application number: 21188438.2
(22) Date of filing: 29.07.2021
(51) Int. Cl.: H04L 9/32

(54) **BLOCKCHAIN SYSTEM THAT INCLUDES BANK NODES EACH HAVING SEPARATE LEDGERS FOR IDENTITY, DIGITAL CURRENCY AND OTHER FUNCTIONS, AND OPERATION METHOD THEREOF**

(30) Priority: 01.09.2020 KR 20200110742
(71) Applicant: Sovereign Wallet Co., Ltd., Seoul 08208 (KR)
(72) Inventor: YUN, Seok Gu, 08208 Seoul (KR)
(74) Representative: Viering, Jentschura & Partner mbB Patent- und Rechtsanwälte

(57) **Abstract**

A blockchain system (100) is disclosed. The blockchain system (100) includes bank nodes (200-1, ..., 200-4) and mobile nodes (300-1, 300-2), and each of the bank nodes (200-1, ..., 200-4) includes an identity ledger (210) that includes a public key (PuKl, PuK3, PuK3, PuK4) of each of the bank nodes (200-1, ..., 200-4), a digital ID (DID1, ..., DID4) for identifying an identity of a user of each of the bank nodes (200-1, ..., 200-4), a public key (PuKml, PuKm2) of each of the mobile nodes (300-1, 300-2), and a digital ID (DIDml, DIDm2) for identifying an identity of each of the mobile nodes (300-1, 300-2).

## Description

### TECHNICAL FIELD

The present invention relates to a blockchain system, and more particularly to a blockchain system that includes bank nodes each having separate ledgers for identity, digital currency, and/or other functions, and an operation method thereof.

### BACKGROUND ART

In a conventional blockchain system for cryptocurrencies or crypto assets, a public key arbitrarily generated by a user or an arbitrary hash value derived from the public key is defined as an address, and transactional information using the address is recorded in the blockchain system.

In such a blockchain system, since identity information of a remitter is not linked to an address of the remitter and identity information of a recipient is not linked to an address of the recipient, the identity of the remitter and the identity of the recipient may not be confirmed. As a result, identity authentication of a user is not possible and money laundering cannot be prevented.

### SUMMARY

A technical object of the present invention is to provide a blockchain system that includes bank nodes each including an identity ledger that stores digital IDs linked to identity information for identifying an identity of each of transaction parties to prevent illegal money laundering, and an operation method thereof.

The technical object of the present invention is to provide a blockchain system that includes bank nodes each including an identity ledger that stores public keys of nodes for decentralization.

The technical object of the present invention is to provide a blockchain system that includes bank nodes each capable of dynamically generating a corresponding digital currency ledger.

The technical object of the present invention is to provide a blockchain system that can dramatically reduce a data size by recording an account balance of a digital currency for each identity (for each digital ID) extracted from transactional information of a digital currency ledger such that a blockchain node can be operated in a form of a mobile application. Various embodiments of the present invention provide a blockchain system and an operation method of a blockchain system as described by the independent claims. Further embodiments are described in the dependent claims.

An exemplary embodiment of the present invention is directed to a blockchain system, including bank nodes and mobile nodes, in which each of the bank nodes includes an identity ledger that includes a public key of each of the bank nodes, a digital ID for identifying an identity of a user of each of the bank nodes, a public key of each of the mobile nodes, and a digital ID for identifying an identity of each of the mobile nodes. According to exemplary embodiments, each of the bank nodes further includes a chaincode registration ledger in which chaincodes generated by the bank nodes are registered according to a consensus between the bank nodes and the mobile nodes, the chaincodes include a digital currency issuance chaincode for issuing a digital currency and a digital currency transaction chaincode downloaded to at least one mobile node with which transactions are desired using the digital currency among the mobile nodes.

According to exemplary embodiments, each of the bank nodes further includes a chaincode execution ledger, when any one of the bank nodes executes the digital currency issuance chaincode registered in the chaincode registration ledger, each of the bank nodes registers chaincode execution information, which includes issuance conditions of the first digital currency and a result of execution indicating whether the first digital currency is issued, in the chaincode execution ledger included in each of the bank nodes in a blockchain method using a blockchain consensus.

According to exemplary embodiments, the chaincode execution information includes a total issuance amount of the digital currency, a transaction unit of the digital currency, and an ID of the digital currency transaction chaincode.

According to exemplary embodiments, each of the bank nodes further includes a collateral asset registration ledger, when any one of the bank nodes issues the digital currency by executing the digital currency issuance chaincode registered in the chaincode registration ledger, each of the bank nodes registers collateral asset registration information in the collateral asset registration ledger included in each of the bank nodes in a blockchain method using a blockchain consensus when the any one bank node generates the collateral asset registration information on a collateral asset for securing an issuance of the digital currency.

According to exemplary embodiments, the collateral asset registration information includes a type of the collateral asset, an amount of the collateral asset, and information on a collateral asset storage bank in which the collateral asset is stored.

According to exemplary embodiments, each of the bank nodes further includes a digital currency registration ledger, any one of the bank nodes issues the digital currency by executing the digital currency issuance chaincode registered in the chaincode registration ledger, generates digital currency issuance information including an issuance amount and transaction conditions of the issued digital currency, each of the bank nodes registers the digital currency issuance information in the digital currency registration ledger included in each of the bank nodes in a blockchain method using a blockchain consensus.

According to exemplary embodiments, the digital currency issuance information includes an ID of the digital currency, a total issuance amount of the digital currency, a transaction unit of the digital currency, and an ID of the digital currency transaction chaincode.

According to exemplary embodiments, the digital currency issuance information is downloaded to the at least one mobile node.

According to exemplary embodiments, each of the bank nodes further includes digital currency ledgers, a first digital currency ledger among the digital currency ledgers stores transactional information made between transaction parties using a first digital currency among different digital currencies, each of the bank nodes registers the transactional information in the digital currency registration ledger included in each of the bank nodes in a blockchain method using a blockchain consensus, and wherein the transaction parties include at least one of the bank nodes and at least one of the mobile nodes.

According to exemplary embodiments, the first digital currency ledger includes: an event source ledger that stores all of the transactional information made between the transaction parties in a form of a blockchain; and a summary ledger that stores some transactional information among all of the transactional information made between the transaction parties.

According to exemplary embodiments, the some transactional information or the summary ledger is downloaded to the at least one mobile node.

Another exemplary embodiment of the present invention is directed to an operation method of a blockchain system that includes a blockchain network including bank nodes and mobile nodes, including publishing, by each of the bank nodes, a public key of each of the bank nodes and a digital ID for identifying an identity of each of the bank nodes in the blockchain network, publishing, by each of the mobile nodes, a public key of each of the mobile nodes and a digital ID for identifying an identity of each of the mobile nodes in the blockchain network, and receiving, by each of the bank nodes, the public key of each of the bank nodes, the digital ID for identifying the identity of each of the bank nodes, the public key of each of the mobile nodes, and the digital ID for identifying the identity of each of the mobile nodes to register the received public keys and digital IDs in an identity ledger included in each of the bank nodes.

According to exemplary embodiments, the operation method further includes: generating, by each of the bank nodes, chaincodes to publish the chaincodes in the blockchain network; and registering, by each of the bank nodes, chaincodes published by each of the bank nodes in a chaincode registration ledger included in the each of the bank nodes according to a consensus among the bank nodes and the mobile nodes, wherein the chaincodes include: a digital currency issuance chaincode for issuing a digital currency; and a digital currency transaction chaincode downloaded to at least one mobile node with which transactions are desired using the digital currency among the mobile nodes.

According to exemplary embodiments, each of the bank nodes further includes digital currency ledgers, the operation method further including storing, by each of the bank nodes, transactional information made between transaction parties using a first digital currency among digital currencies in a first digital currency ledger among the digital currency ledgers, and wherein the transaction parties include at least one of the bank nodes and at least one of the mobile nodes.

According to exemplary embodiments, the first digital currency ledger includes an event source ledger and a summary ledger, and the storing transactional information in the first digital currency ledger including: storing, by each of the bank nodes, all of the transactional information made between the transaction parties in the event source ledger in a form of a blockchain; and extracting some transactional information from all of the transactional information made between the transaction parties to store the extracted transactional information in the summary ledger.

Still another exemplary embodiment of the present invention is directed to an operation method of a blockchain system, including issuing, by a first bank node including a first digital currency ledger, a first digital currency, issuing, by a second bank node including a second digital currency ledger the same as the first digital currency ledger, a second digital currency, performing, by mobile nodes, transactions in the first digital currency, registering, by the first bank node, transactional information made between the mobile nodes using the first digital currency in the first digital currency ledger, and registering, by the second bank node, the transactional information in the second digital currency ledger. According to exemplary embodiments, the first digital currency ledger includes a first event source ledger and a first summary ledger, and the registering transactional information in the first digital currency ledger includes registering, by the first bank node, all of the transactional information in the first event source ledger in a form of a blockchain and extracting, by the first bank node, some transactional information from all of the transactional information registered in the first event source ledger to register the extracted some transactional information in the first summary ledger.

According to exemplary embodiments, the operation method further includes: transmitting, by the first bank node, the extracted some transactional information or the first summary ledger to at least one of the mobile nodes.

According to exemplary embodiments, the first bank node further includes a first chaincode registration ledger, the second bank node further includes a second chaincode registration ledger the same as the first chaincode registration ledger, and the operation method further includes: publishing, by the first bank node, a first chaincode for issuing the first digital currency in a blockchain network including the first bank node, the second bank node, and the mobile node; and registering, by each of the first bank node and the second bank node, the first chaincode in each of the first chaincode registration ledger and the second chaincode registration ledger on the basis of a consensus on the first chaincode transmitted from all nodes included in the blockchain network.

According to exemplary embodiments, performing transactions in the first digital currency includes: receiving, by each of the mobile nodes, a digital currency transaction chaincode used for transactions in the first digital currency downloaded from one of the first bank node and the second bank node; and performing, by the mobile nodes, the transactions using the downloaded digital currency transaction chaincode.

According to exemplary embodiments, the first bank node further includes a first chaincode execution ledger, the second bank node further includes a second chaincode execution ledger the same as the first chaincode execution ledger, the operation method further including: executing, by the first bank node, a first chaincode for issuing the first digital currency to generate chaincode execution information corresponding to a result of the execution; and registering, by each of the first bank node and the second bank node, the chaincode execution information in each of the first chaincode execution ledger and the second chaincode execution ledger in a blockchain method using a blockchain consensus, wherein the chaincode execution information includes issuance conditions of the first digital currency and a result of execution indicating whether the first digital currency is issued.

According to exemplary embodiments, the first bank node further includes a first collateral asset registration ledger, the second bank node further includes a second collateral asset registration ledger the same as the first collateral asset registration ledger, and the operation method further includes: generating, by the first bank node, collateral asset registration information on a collateral asset for securing an issuance of the first digital currency; and storing, by each of the first bank node and the second bank node, the collateral asset registration information in each of the first collateral asset registration ledger and the second collateral asset registration ledger in a blockchain method using a blockchain consensus.

According to exemplary embodiments, the first bank node further includes a first digital currency registration ledger, the second bank node further includes a second digital currency registration ledger the same as the first digital currency registration ledger, the operation method further includes: generating, by the first bank node, digital currency issuance information on a digital currency issued by executing a first chaincode for issuing the first digital currency; and storing, by each of the first bank node and the second bank node, the digital currency issuance information in each of the first digital currency registration ledger and the second digital currency registration ledger in a blockchain method using a blockchain consensus, wherein the digital currency issuance information includes an issuance amount and transaction conditions of the issued first digital currency.

Still another exemplary embodiment of the present invention is directed to an operation method of a blockchain system that includes a blockchain network including a first bank node, a second bank node, and mobile nodes, including generating, by the first bank node including a first chaincode registration ledger, a first chaincode for issuing a first digital currency, generating, by the second bank node including a second chaincode registration ledger the same as the first chaincode registration ledger, a second chaincode for issuing a second digital currency, publishing, by the first bank node, the first chaincode in the blockchain network, and registering, by each of the first bank node and the second bank node, the first chaincode in each of the first chaincode registration ledger and the second chaincode registration ledger on the basis of a first consensus on the first chaincode transmitted from all nodes included in the blockchain network.

According to exemplary embodiments, the operation method further includes: publishing, by the second bank node, the second chaincode in the blockchain network; and registering, by each of the first bank node and the second bank node, the second chaincode in each of the first chaincode registration ledger and the second chaincode registration ledger on the basis of a second consensus on the second chaincode transmitted from the all nodes.

According to exemplary embodiments, the first bank node further includes a first chaincode execution ledger, the second bank node further includes a second chaincode execution ledger the same as the first chaincode execution ledger, the operation method further includes: generating, by the first bank node, first chaincode execution information by executing the first chaincode registered in the first chaincode registration ledger; and registering, by each of the first bank node and the second bank node, the first chaincode execution information in each of the first chaincode execution ledger and the second chaincode execution ledger in a blockchain method using a blockchain consensus, wherein the first chaincode execution information includes issuance conditions of the first digital currency and a result of execution indicating whether the first digital currency is issued.

According to exemplary embodiments, the first bank node further includes a first digital currency registration ledger, the second bank node further includes a second digital currency registration ledger the same as the first digital currency registration ledger, the operation method further including: generating, by the first bank node, when a first digital currency is issued by executing the first chaincode registered in the first chaincode registration ledger, first digital currency issuance information on the issued first digital currency; and storing, each of the first bank node and the second bank node, the first digital currency issuance information in each of the first digital currency registration ledger and the second digital currency registration ledger in a blockchain method using a blockchain consensus, wherein the first digital currency issuance information includes an issuance amount and transaction conditions of the issued first digital currency.

According to exemplary embodiments, the first bank node further includes a first digital currency ledger, the second bank node further includes a second digital currency ledger the same as the first digital currency ledger, and the operation method further includes: performing, by the mobile nodes, transactions in the first digital currency issued by the first bank node; registering, by the first bank node, transactional information made between the mobile nodes using the first digital currency in the first digital currency ledger; and registering, by the second bank node, the transactional information in the second digital currency ledger.

According to exemplary embodiments, the first digital currency ledger includes a first event source ledger and a first summary ledger, and the registering transactional information in the first digital currency ledger includes: registering, by the first bank node, all of the transactional information in the first event source ledger in a form of a blockchain; and extracting, by the first bank node, some transactional information from all of the transactional information registered in the first event source ledger to register the extracted some transactional information in the first summary ledger.

Still another exemplary embodiment of the present invention is directed to an operation method of a blockchain system, including issuing, by one of bank nodes each including a digital currency issuance chaincode and a digital currency transaction chaincode, a digital currency by executing the digital currency issuance chaincode; receiving, by each of a first mobile node and a second mobile node, a digital currency transaction chaincode downloaded from the one bank nodes; and performing, by the first mobile node and the second mobile node, transactions in the digital currency using the downloaded digital currency transaction chaincode.

According to exemplary embodiments, the operation method further includes: generating, by the one bank node, the digital currency issuance chaincode and the digital currency transaction chaincode; publishing, by the one bank node, the digital currency issuance chaincode and the digital currency transaction chaincode in a blockchain network including the bank nodes, the first mobile node, and the second mobile node; and registering, by each of the bank nodes, the digital currency issuance chaincode and the digital currency transaction chaincode in a chaincode registration ledger included in each of the bank nodes on the basis of a first consensus on the digital currency issuance chaincode and a second consensus on the digital currency transaction chaincode, transmitted from all nodes included in the blockchain network.

### BRIEF DESCRIPTION OF DRAWINGS

FIG. 1 is a schematic diagram of a blockchain system including bank nodes and mobile nodes according to an embodiment of the present invention;
FIG. 2 shows ledgers included in each bank node and information to be downloaded to a mobile node;
FIG. 3 shows an identity ledger included in each bank node;
FIG. 4 shows a chaincode registration ledger included in each bank node;
FIG. 5 shows a chaincode execution ledger included in each bank node;
FIGs. 6A to 6C show embodiments of the chaincode execution ledger included in each bank node;
FIG. 7 shows a digital currency registration ledger included in each bank node;
FIG. 8 shows a collateral asset registration ledger included in each bank node;
FIG. 9 shows an event source ledger included in each bank node;
FIG. 10 shows a summary ledger included in each bank node and a specific mobile node; and
FIG. 11 is a flowchart for describing an operation of the blockchain system shown in FIG. 1.

### DESCRIPTION

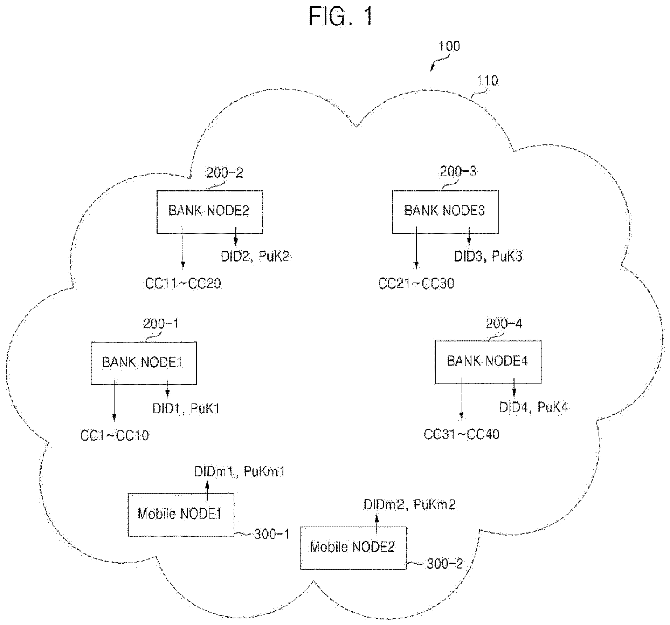

FIG. 1 is a schematic diagram of a blockchain system that includes bank nodes and mobile nodes according to an embodiment of the present invention. Referring to FIG. 1, a blockchain system 100 includes a blockchain network 110 that includes bank nodes 200-1 to 200-4 and mobile nodes 300-1 and 300-2. For example, the blockchain system 100 may be a blockchain system dedicated to financial transactions in digital currencies of a central bank with legal legitimacy.

A bank node, which is also called a digital currency issuing node, refers to a hardware component capable of issuing (also referred to as "generating") a digital currency or a software component combined with the hardware component, and has a function of dynamically generating a new blockchain in real time (or on the fly) using a computer program (or a chaincode). For example, the bank node may be an on-line server, but the present invention is not limited thereto. At least one bank node may relay financial transactions (for example, electronic financial transactions) executed between mobile nodes.

Digital currency is also called digital money, electronic currency, or electronic money, and means a balance or a record stored in a distributed database on the Internet, an electronic computer database, a digital file, or a stored-value card. Examples of the digital currency include cryptocurrencies, virtual currencies, central bank digital currencies (CBDC), e-cash, gift certificates, mileage cards, and/or national currencies.

A mobile node, which is also called a digital currency transaction node, refers to a hardware component having only a transaction ledger (for example, a summary ledger) that records only an account balance of a digital currency that a user of the mobile node wants to use or a software component combined with the hardware component. For example, the mobile node may be a mobile device or an application executed on the mobile device. For example, a mobile device may be a portable computing device that has a data storage capacity significantly smaller than a data storage capacity of a bank node, such as a personal digital assistant (PDA), a mobile Internet device (MID), a cellular phone, or a smartphone.

The mobile node includes an electronic wallet, and may perform financial transactions in a digital currency with a transaction party (for example, at least one bank node and/or at least one counterparty mobile node) using the electronic wallet.

An electronic wallet (or an e-wallet) which is known as a digital wallet, a smart wallet, a crypto wallet, or a blockchain wallet refers to as an electronic device, an on-line service, or software (or a program) that allows users (for example, bank nodes and/or mobile nodes) to perform electronic transactions.

Each of bank nodes and each of mobile nodes participate in consensus related to the registration, update, registration cancellation, update cancellation, and/or discard of a corresponding chaincode for issuing a corresponding digital currency.

Although FIG. 1 shows the blockchain network 110 including four bank nodes 200-1 to 200-4 and two mobile nodes 300-1 and 300-2, the four bank nodes 200-1 to 200-4 and the two mobile nodes 300-1 and 300-2 represent all nodes included in the blockchain network 110 aggregatively or collectively.

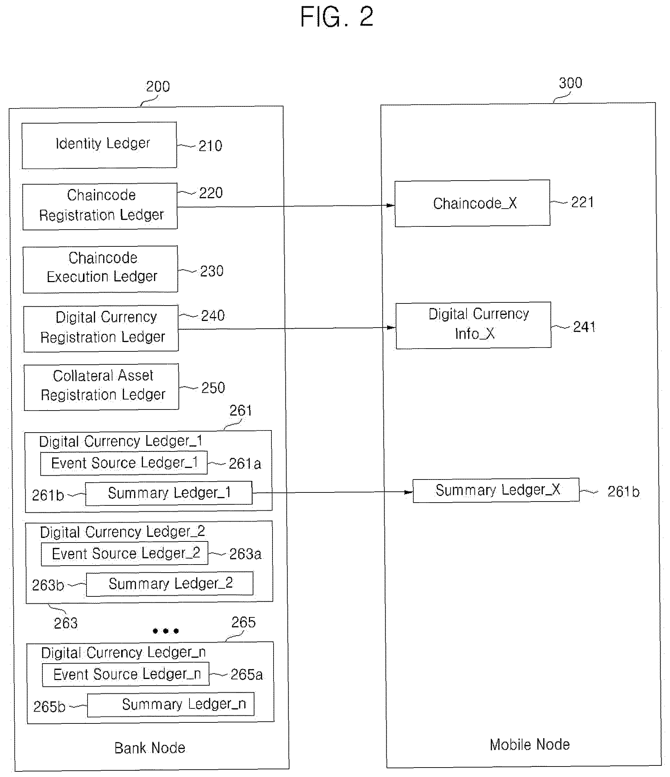

FIG. 2 shows ledgers included in each bank node and information to be downloaded to a mobile node.

Referring to FIGS. 1 and 2, each bank node (200-1 to 200-4, collectively referred to as "200") includes a plurality of ledgers 210, 220, 230, 240, 250, 261, 263, ..., and 265 each separated by function. According to embodiments, each bank node 200 may not include a collateral asset registration ledger 250.

Each of the ledgers 210, 220, 230, 240, 250, 261, 263, ..., and 265 may be a blockchain. Here, blockchain is a ledger management technology based on a distributed computing technology that stores management target data in a method of continuously adding small data called a block while storing the management target data in a distributed data storage environment based on a chain-type link in which a next block stores a hash value of a previous block to prevent anyone from arbitrarily modifying the management target data and to enable anyone to read a result of a change in the management target data.

A blockchain method using a blockchain consensus, which means a blockchain consensus algorithm, is a core element of any blockchain system or any blockchain network, and plays a role in maintaining the integrity and security of a decentralized system. The consensus algorithm may be defined as a mechanism for achieving a consensus in the blockchain network.

In a conventional blockchain system, since all transaction data is recorded in a single integrated ledger in a blockchain method in which all the transaction data is linked to hash values each other, an amount of transaction data recorded in the integrated ledger increases as the number of financial transactions increases.

In the conventional blockchain system, it is not possible to delete transaction data recorded in the integrated ledger in the blockchain method, and, even if it is possible to delete the transaction data, a blockchain is disconnected if the transaction data is deleted. Therefore, it may not be possible to verify the blockchain.

Since the amount of transaction data recorded in the conventional integrated ledger is too large, a mobile node (for example, a smartphone) with a limited storage capacity (or a limited memory capacity) has difficulty in storing the integrated ledger as it is.

Each bank node 200 included in the blockchain system 100 according to the present invention, which is devised to solve such problems, registers (also referred to as "records" or "stores") ledgers 210, 220, 230, 240, 250, 261, 263, ..., and 265 each separated by function instead of a single ledger like the conventional integrated ledger.

For example, an amount of data registered in each of the ledgers 210, 220, 230, 240, 250, 261, 263, ..., and 265 in the form of a blockchain is significantly less than an amount of data stored in the conventional integrated ledger in the form of a blockchain. In addition, since unnecessary ledgers (for example, ledgers of digital currencies that are not used any longer) can be deleted, the amount of data can be further reduced by deleting the unnecessary ledgers.

Since each mobile nodes 300-1 and 300-2 (collectively referred to as "300") does not store a single ledger like the conventional integrated ledger itself by receiving it downloaded from the bank node 200, but stores only a summery ledger that records only an account balance of a digital currency required for financial transactions by receiving it downloaded from the bank node 200 or updates an existing summary ledger by receiving only an updated account balance, the amount of transaction data stored in the summary ledger of each mobile node 300 is significantly reduced as compared to the amount of transaction data stored in the conventional integrated ledger.

Computing power of each mobile node 300 that processes only the summary ledger or updates only the account balance is significantly reduced as compared to computing power required for processing the conventional integrated ledger, and an amount of communication data transmitted or received between each bank node 200 and each mobile node 300 to process the summary ledger or the account balance is significantly reduced as compared to the amount of data when the conventional integrated ledger is processed.

Even if each mobile node 300 does not have a single ledger like the conventional integrated ledger but has only the summary ledger, an answer or a response to a data request (or an account balance request) from a counterpart bank node and/or a counterpart mobile node can be made.

Since each of the bank nodes 200-1 to 200-4 has the same ledgers 210, 220, 230, 240, 250, 261, 263, ..., and 265 registered in the blockchain method using a blockchain consensus, the ledgers 210, 220, 230, 240, 250, 261, 263, ..., and 265 can be safely stored or maintained unless all of the bank nodes 200-1 to 200-4 fail (or unless all of the bank nodes are unavailable).

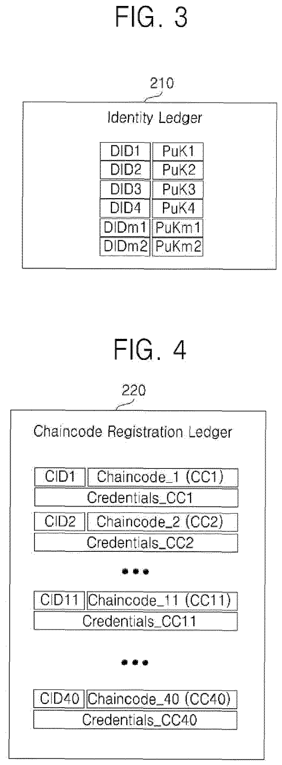

FIG. 3 shows an identity ledger included in each bank node. Referring to FIGS. 1 to 3, an identity ledger 210 registers digital identifications (IDs) DID1 to DID4, DIDm1, and DIDm2 and public keys PuK1 to PuK4, PuKml, and PuKm2 of each of all nodes 200-1 to 200-4, 300-1, and 300-2 included in the blockchain network 110.

Here, a node may refer to a node itself and/or a user of the node unless otherwise expressed.

A public key and a private key are made to be a pair, and a signature of a message generated by a corresponding node (for example, 300-1) may be verified using a corresponding public key (for example, PuKm1) registered in the identity ledger 210 according to a mathematical principle of a public key encryption algorithm that can decrypt data encrypted with the private key with the public key. For example, encrypted data is generated when data is electronically signed with the private key, and decrypted data (that is, original data) is generated (or restored) when the encrypted data is decrypted using the public key for a verification.

Financial transactions in a digital currency are performed between parties using the digital IDs registered in the identity ledger 210. Since all financial transactions in a digital currency in the blockchain network 110 are executed using the digital IDs of each of the nodes 200-1 to 200-4, 300-1, and 300-2, even though each of the nodes 200-1 to 200-4, 300-1, and 300-2 loses its own private key, each of the nodes 200-1 to 200-4, 300-1, and 300-2 may execute financial transactions in a digital currency registered in the digital currency ledger by registering a new public key in the identify ledger 210 again.

The identity ledger 210 may function as a decentralized public key infrastructure (PKI).

Each of the digital identifications (IDs) DID1 to DID4, DIDm1, and DIDm2 refers to identity information that can uniquely identify the identity of each of the nodes 200-1 to 200-4, 300-1, and 300-2 or a user of each of the nodes 200-1 to 200-4, 300-1, and 300-2.

Identity information collectively refers to personal information and unique information linked to the personal information. Personal information refers to information that can directly or indirectly identify an individual among information regarding the individual. For example, personal information, as information regarding an individual, refers to information on codes, texts, voice, sound, images, and biometric characteristics that can identify the individual by a name (or one's real name), a resident registration number, and the like (even if a specific individual cannot be identified by the information alone, information that can be easily combined with other types of information to identify the specific individual is included).

Examples of identity information for identifying the identity of a user include at least one of a name (or a title), a resident registration number (a corporate registration number), a smartphone phone number, fingerprint information, iris information, facial recognition information, and voice information; however, the present invention is not limited thereto.

Here, each of the digital IDs DID1 to DID4, DIDm1, and DIDm2 is information different from an address defined by a public key arbitrarily generated by the user of each of the nodes 200-1 to 200-4, 300-1, and 300-2 or an arbitrary hash value derived from the public key.

Since each address used in the conventional blockchain system is not directly or indirectly connected to the identity information of each of the nodes 200-1 to 200-4, 300-1, and 300-2, the conventional blockchain system cannot identify or distinguish the identity of the user of each of the nodes 200-1 to 200-4, 300-1, and 300-2 using the each address. As a result, it is difficult to prevent illegal money laundering in the conventional blockchain system using addresses.

Each of the nodes 200-1 to 200-4, 300-1, and 300-2 can verify authenticity of information (or certificates) electronically signed by the user of each of the nodes 200-1 to 200-4, 300-1, and 300-2 using each of the public keys PuK1 to PuK4, PuKml, and PuKm2.

Each of the nodes 200-1 to 200-4, 300-1, and 300-2 generates a pair of a public key and a private key, and digital IDs DID1 to DID4, DIDm1, and DIDm2, and publishes (or transmits) the digital IDs DID1 to DID4, DIDm1, and DIDm2 and the public keys PuK1 to PuK4, PuKml, and PuKm2 in the blockchain network 110. Accordingly, each of the bank nodes 200-1 to 200-4 included in the blockchain network 110 receives the digital IDs DID1 to DID4, DIDm1, and DIDm2 and the public keys PuK1 to PuK4, PuKml, and PuKm2, and registers these in the identity ledger 210 in the blockchain method using a blockchain consensus.

Each of the nodes 200-1 to 200-4, 300-1, and 300-2 stores its own private key (or stores it in an electronic wallet), electronically signs a transaction for financial transactions using the private key, generates the electronically-signed transaction, and publishes (or transmits) the electronically-signed transaction in the blockchain network 110.

FIG. 4 shows a chaincode registration ledger included in each bank node. Referring to FIGS. 1, 2, and 4, a first bank node 200-1 performs a procedure for registering first chaincodes CC1 to CC10 in a chaincode registration ledger 220, a second bank node 200-2 performs a procedure for registering second chaincodes CC11 to CC20 in the chaincode registration ledger 220, a third bank node 200-3 performs a procedure for registering third chaincodes CC21 to CC30 in the chaincode registration ledger 220, and a fourth bank node 200-4 performs a procedure for registering fourth chaincodes CC31 to CC40 in the chaincode registration ledger 220.

A chaincode described in this specification (this is also referred to as a "smart contract") refers to an application running on a blockchain, and issues programmable money, such as a digital currency, or provides a core function of financial transactions in the digital currency.

The plurality of chaincodes CC1 to CC40 include a digital currency issuance chaincode for issuing a digital currency and a digital currency transaction chaincode for performing financial transactions in the digital currency. Here, financial transactions include remittance, payment, exchange, inquiry, and/or confirmation (or check) of an account balance, but the present invention is not limited thereto.

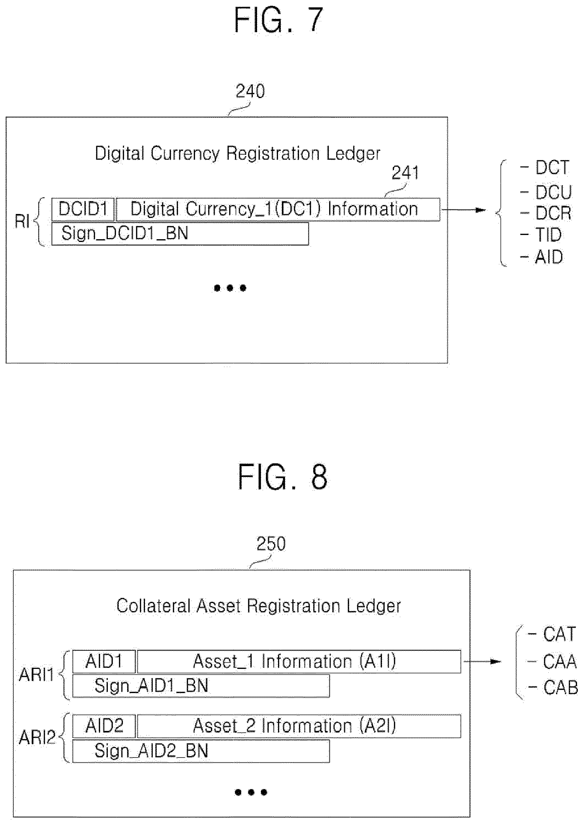

When a new digital currency is issued, the bank node 200 according to the present invention can programmatically issue the new digital currency simply by executing a digital currency issuance chaincode without a need to generate a separate blockchain. When the bank node 200 executes a digital currency issuance chaincode, digital currency issuance information RI that includes an issuance amount and transaction conditions 241, and a digital currency ID DCID1 is registered in a digital currency registration ledger 240 as shown in FIG. 7. Each of the bank nodes 200-1 to 200-4 can process financial transactions in the issued digital currency.

The bank node 200 may issue a digital currency by executing a digital currency issuance chaincode, and the mobile node 300 may receive a digital currency transaction chaincode related to the digital currency issuance chaincode downloaded from the bank node 200 to perform financial transactions with a counterpart bank node and/or a counterpart mobile node using the digital currency.

The procedure for registering a chaincode in the chaincode registration ledger refers to a procedure of officially registering the chaincode in the chaincode registration ledger according to consensus requirements of all nodes included in the blockchain network 110 (for example, a consensus of a majority of all the nodes (this is also referred to as "agreement" or "agreement signature")).

When a chaincode is updated, the chaincode is updated in the chaincode registration ledger according to the consensus requirements of all nodes included in the blockchain network 110.

However, when the consensus requirements of all nodes included in the blockchain network 110 for a chaincode (for example, an objection consensus of a majority of all the nodes (this is also referred to as "objection" or an "objection signature")) are satisfied, registration or update of the chaincode is cancelled and the chaincode is discarded.

For example, when the first bank node 200-1 publishes a first chaincode CC1 corresponding to a first chaincode ID CID1 in the blockchain network 110, each of the other nodes 200-2 to 200-4, 300-1, and 300-2 included in the blockchain network 110 receives the first chaincode CC1.

When each of the other nodes 200-2 to 200-4, 300-1 and 300-2 creates a consent form indicating whether it agrees on the first chaincode CC1 (for example, an agreement or opposition), and transmits the consent form to the first bank node 200-1, the first bank node 200-1 counts the number of first consent forms indicating an agreement among consent forms transmitted from the other nodes 200-2 to 200-4, 300-1, and 300-2 to generate a count value, registers the first chaincode CC1 in the chaincode registration ledger 220 when the count value is equal to or greater than a half of the total number of consent forms (or the number of all nodes), and publishes in the blockchain network 110 that the first chaincode CC1 is registered in the chaincode registration ledger 220.

Credentials_CC1 in FIG. 4 includes consent forms transmitted from all the nodes 200-1 to 200-4, 300-1, and 300-2 to determine whether to register the first chaincode CC1 in the chaincode registration ledger 220. The consent forms transmitted from each of the nodes 200-1 to 200-4, 300-1, and 300-2 are consent forms electronically signed with private keys of each of the nodes 200-1 to 200-4, 300-1, and 300-2.

Each of chaincodes CC2 to CC40 shown in FIGS. 1 and 4 is registered in the chaincode registration ledger 220 of each of the bank nodes 200-1 to 200-4 in the blockchain method using a blockchain consensus according to a procedure the same as or similar to the procedure for registering the first chaincode CC1 in the chaincode registration ledger 220 as described above (for example, the procedure is also referred to as the "blockchain method using a blockchain consensus).

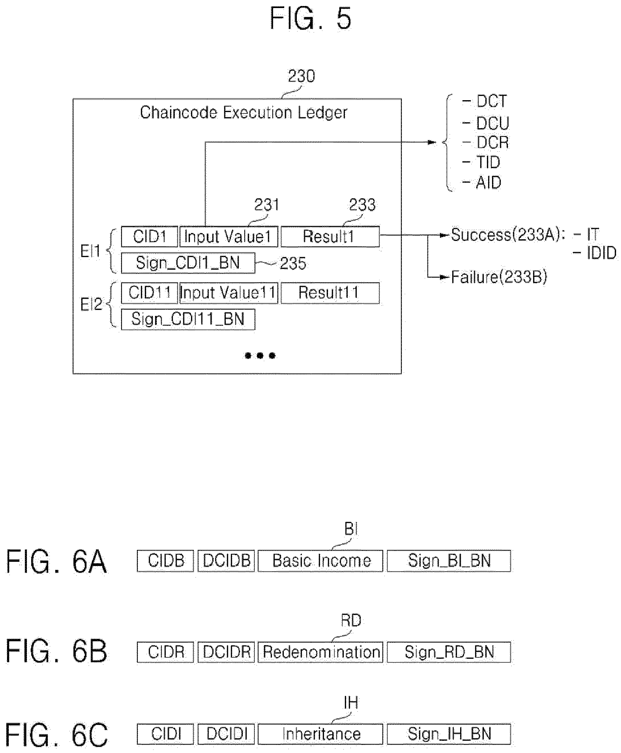

FIG. 5 shows a chaincode execution ledger included in each bank node.

Referring to FIGS. 1, 2, 4, and 5, chaincode execution information EI1 and EI2 generated according to the execution of a digital currency issuance chaincode is registered in the chaincode execution ledger 230. For example, it is assumed that different chaincodes CC1 and CC11 corresponding to different chaincode IDs CID1 and CID11 are different digital currency issuance chaincodes.

In the conventional blockchain system, since all execution details (or all transaction data) in units of instructions of an application are all recorded in an integrated ledger in the blockchain method, a considerably large number of execution details are recorded in the integrated ledger.

Therefore, the blockchain system 100 according to the present invention registers each of the chaincodes CC1 to CC40 in the chaincode registration ledger 220 of each bank node 200 according to a consensus of a majority of the nodes 200-1 to 200-4, 300-1, and 300-2 to reduce the amount of transaction data recorded in a blockchain corresponding to the conventional integrated ledger, and, when any one of the chaincodes CC1 to CC40 is executed by any one of the bank nodes 200, registers only chaincode execution information EI1 or EI2 corresponding to a result of the execution in the chaincode execution ledger 230 of each bank node 200. Here, the chaincode registration ledger 220 and the chaincode execution ledger 230 are present separately.

For example, when the first bank node 200-1 executes a first chaincode CC1 corresponding to a first chaincode ID CID1 to issue a first digital currency, first chaincode execution information Ell is registered in the chaincode execution ledger 230. The first chaincode execution information Ell includes a first chaincode ID CID1 for identifying a first chaincode CC1, an input value 231, an execution result 233, and an electronic signature (Sign_CID1_BN; 235) of the first bank node 200-1 that has issued the first digital currency.

As the first bank node 200-1 publishes the first chaincode execution information Ell in the blockchain network 110, the chaincode execution ledger 230 is registered in each of the bank nodes 200-1 to 200-4 according to the blockchain method using a blockchain consensus.

The input value 231 representing issuance conditions of the first digital currency is input to the first chaincode CC1, and the input value 231 includes a total issuance amount (DCT) of the first digital currency issued (or to be issued) by the first chaincode CC1, a transaction unit when the first digital currency is used for financial transactions (DCU, for example, some decimal places, to two decimal places such as USD 120.36), a transaction ratio (or an exchange rate, DCR) between the first digital currency and another digital currency, an ID of a digital currency transaction chaincode required for financial transactions in the first digital currency (TID, for example, an ID of a chaincode required for financial transactions between transaction parties), and the like.

According to an embodiment, when the first digital currency is issued using the first chaincode CC1, the input value 231 may further include an ID of a collateral asset (AID, for example, an ID of a collateral asset registered in the collateral asset registration ledger 250) to secure the issuance of the first digital currency.

The execution result 233 indicating whether the first digital currency is issued may indicate a success 233A or a failure 233B in the issuance of the first digital currency.

The success 233A may include information indicating a success in the issuance, an issuance time IT of the first digital currency, and a digital currency ID (IDID, IDID may be the same as DCID1 of FIG. 7) for identifying the issued first digital currency.

The failure 233B includes information indicating a failure in the issuance.

For example, when the second bank node 200-2 executes an eleventh chaincode CC11 corresponding to an eleventh chaincode ID CID11 to issue a second digital currency, second chaincode execution information EI2 is registered in the chaincode execution ledger 230. The second chaincode execution information EI2 includes an eleventh chaincode ID CID11 for identifying an eleventh chaincode CC11, an input value Input Value11 indicating issuance conditions of the second digital currency, an execution result Result11 indicating whether the second digital currency is issued, and an electronic signature Sign_CID11_BN of the second bank node 200-2 that has issued the second digital currency. The input value Input Value11 is input to the eleventh chaincode CC11 to issue the second digital currency.

As the second bank node 200-2 publishes the second chaincode execution information EI2 in the blockchain network 110, the chaincode execution ledger 230 is registered in each of the bank nodes 200-1 to 200-4 according to the blockchain method using a blockchain consensus.

FIGs. 6A to 6C show embodiments of the chaincode execution ledger included in each bank node.

Referring to FIGS. 1, 2, 4, and 6A, a chaincode execution ledger related to basic income includes a chaincode ID CIDB for identifying a basic income issuance chaincode, a digital currency ID DCIDB for identifying a basic income digital currency issued by the basic income issuance chaincode, an input value BI input to the basic income issuance chaincode to issue (or process) the basic income digital currency, and an electronic signature Sign BI BN of a bank node that has issued the basic income digital currency.

For example, an input value BI corresponding to issuance conditions may include a total issuance amount of a basic income digital currency, information indicating to whom, when, and how much to pay the basic income digital currency, and/or information on a basic income transaction chaincode for processing the basic income digital currency.

Referring to FIGS. 1, 2, 4, and 6B, a chaincode execution ledger related to currency reform includes a chaincode ID CIDR for identifying a currency reform chaincode, a digital currency ID DCIDR for identifying a digital currency for a currency reform issued by the currency reform chaincode, an input value RD input to the currency reform chaincode to issue (or process) the digital currency for a currency reform, and an electronic signature Sign RD BN of a bank node that has issued the digital currency for a currency reform.

For example, an input value RD corresponding to issuance conditions may include a total issuance amount of the digital currency for a currency reform, a type of the digital currency for a currency reform, an exchange rate between the digital currency for a currency reform and an existing digital currency to be exchanged, a time point of use of the digital currency for a currency reform, and/or information on a currency reform transaction chaincode for processing the digital currency for currency reform.

Referring to FIGS. 1, 2, 4, and 6C, a chaincode execution ledger related to inheritance includes a chaincode ID CIDI for identifying an inheritance chaincode, a digital currency ID DCIDI for identifying a digital currency issued by the inheritance chaincode, an input value IH input to the inheritance chaincode to process the digital currency, and an electronic signature Sign_IH_BN of a bank node that has issued the digital currency.

For example, an input value IH corresponding to issuance conditions may include information on an inheritor, information on an inheritee, an amount of digital currency to be inherited, and/or information on an inheritance transaction chaincode for processing the digital currency.

For example, when a court decision is required, for example, in the case of an inheritance, the input value IH may further include an inheritance certificate issued by a court registered in the identity ledger 210. Here, when a digital ID and a public key of a node corresponding to a court are registered in the identity ledger 210, an electronic signature of the court that has issued an inheritance certificate is verified using the public key of the node corresponding to the court registered in the identity ledger 210.

For example, when a digital ID and a public key of a reliable institution (for example, a government office or a bank) are registered in the identity ledger 210, an electronic signature of the institution that has issued a corresponding certificate is verified using the public key of the institution registered in the identity ledger 210.

The chaincode execution ledgers shown in each of FIGS. 6A to 6C may be registered in the chaincode execution ledger 230 of each of the bank nodes 200-1 to 200-4 according to the blockchain method using a blockchain consensus.

FIG. 7 shows a digital currency registration ledger included in each bank node.

Referring to FIGS. 1, 2, 4, and 7, digital currency issuance information RI (this is also referred to as "digital currency registration information") on a newly issued digital currency is registered in the digital currency registration ledger 240. Each of the bank nodes 200-1 to 200-4 is a principal agent that has an issuance right to issue each of new digital currencies. For example, each of the digital currencies may be expressed in different currency signs, for example, 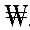 , $, 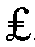 , ¥ , €, BTC (or XBT), or ETH, and the like.

The digital currency registration ledger 240 includes digital currency issuance information RI, and the digital currency issuance information RI includes a digital currency ID for identifying a digital currency issued by executing a chaincode, digital currency information including an issuance amount and transaction conditions of the digital currency, and an electronic signature of a bank node that has issued the digital currency.

For example, it is assumed that the first bank node 200-1 issues a first digital currency corresponding to a first digital currency ID DCID1 by executing the first chaincode CC1 corresponding to the first chaincode ID CID1 registered in the chaincode registration ledger 220.

The chaincode execution information Ell for issuing a first digital currency is registered in the chaincode execution ledger 230 of each bank node 200 described above.

The digital currency registration ledger 240 includes a digital currency ID DCID1 for identifying a first digital currency issued by executing the first chaincode CC1, digital currency information 241 including an issuance amount and transaction conditions of the first digital currency, and an electronic signature Sign_DCID1_BN of the first bank node 200-1 that has issued the first digital currency.

For example, the digital currency information 241 including the issuance amount and the transaction conditions includes a total issuance amount (DCT) of a first digital currency issued (or to be issued) by the first chaincode CC1, a transaction unit (DCU, for example, some decimal places) when the first digital currency is used for financial transactions, a transaction ratio (or an exchange rate, DCR) between the first digital currency and another digital currency, an ID of a digital currency transaction chaincode required for financial transactions in the first digital currency (TID, for example, an ID of a chaincode required for financial transactions between transaction parties), and the like.

According to an embodiment, the digital currency information 241 including the issuance amount and the transaction conditions may further include an ID of a collateral asset (AID, for example, a collateral asset ID stored in the collateral asset registration ledger 250) for securing the issuance of a first digital currency when the first digital currency is issued using the first chaincode CC1.

According to embodiments, the input value 231 of FIG. 5 and the digital currency information 241 may be the same as or different from each other.

FIG. 8 shows the collateral asset registration ledger included in each bank node.

The collateral asset registration ledger 250 includes collateral asset registration information ARI1 and ARI2, and each of the collateral asset registration information ARI1 and ARI2 includes a collateral asset ID for identifying a collateral asset, collateral asset information, and signature information.

For example, when a first digital currency is issued by the first bank node 200-1, the collateral asset registration ledger 250 may include a first collateral asset ID AID1 for identifying a collateral asset for securing the issuance of the first digital currency, first collateral asset information A1I, and first signature information Sign_AID1_BN.

The first collateral asset information A1I includes a type (CAT) of a collateral asset provided by the first bank node 200-1, an amount (CAA) of the collateral asset, and information (CAB) on a collateral asset storage bank in which the collateral asset is deposited (this is also referred to as "stored") when the first bank node 200-1 issues the first digital currency using the first chaincode CC1.

The first collateral asset information A1I indicates how many Kg of gold (CAA) is stored and in which bank (CAB) it is stored when the type (CAT) of a collateral asset is gold. The first signature information Sign_AID1_BN is an electronic signature of the first bank node 200-1 that has registered a collateral asset for securing the issuance of a first digital currency.

For example, when a second digital currency is issued by the second bank node 200-2, the collateral asset registration ledger 250 may include a second collateral asset ID AID2 for identifying a collateral asset for securing the issuance of a second digital currency, second collateral asset information A2I, and second signature information Sign_AID2_BN.

The second collateral asset information A2I includes the type of a collateral asset provided by the second bank node 200-2, the amount of the collateral asset, and information on a collateral asset storage bank in which the collateral asset is stored when the second bank node 200-2 issues a second digital currency using the eleventh chaincode CC11.

The second collateral asset information A2I indicates how much US dollars is stored and in which bank it is stored when the type of a collateral asset is US dollars. The second signature information Sign_AID2_BN is an electronic signature of the second bank node 200-2 that has registered a collateral asset for securing the issuance of a second digital currency.

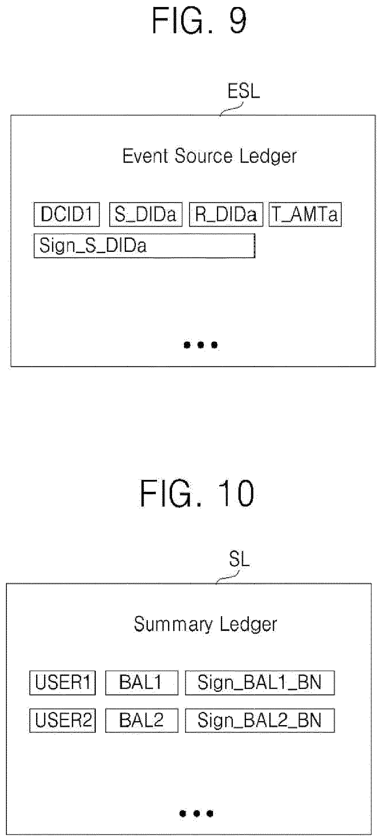

FIG. 9 shows an event source ledger included in each bank node. Referring to FIGS. 1, 2, and 9, each of digital currency ledgers 261, 263, ..., and 265 registers financial transactional information (this is also referred to as "financial transactional details") for each digital currency, and includes each of event source ledgers 261a, 263a, ..., and 265a and each of summary ledgers 261b, 263b, ..., and 265b.

For example, the digital currency ledgers and the summary ledgers are not generated according to a blockchain consensus, but are generated by execution of a chaincode. Since the summary ledgers are data stored in a database and made by bank nodes, the summary ledgers do not require a blockchain consensus and are not in the form of a blockchain. When transactional information (this is also referred to as "transactional details") is recorded in the digital currency ledgers, the transactional information is recorded or registered in the blockchain method using a blockchain consensus.

A corresponding event source ledger 261a, 263a, ..., or 265a is a transaction ledger that stores all transactional information between parties using a corresponding digital currency in the form of a blockchain, and each of the summary ledgers 261b, 263b, ..., and 265b is a transaction ledger that includes only some (for example, an account balance) of all the transactional information between the parties stored in a corresponding event source ledger 261a, 263a, ..., or 265a.

If any one of the bank nodes 200-1 to 200-4 issues a digital currency by executing any one digital currency issuance chaincode among the chaincodes CC1 to CC40 registered in the chaincode registration ledger 220 stored therein, the chaincode execution information EI1 or EI2 generated as the digital currency issuance chaincode is executed is registered in the chaincode execution ledger 230 of each of the bank nodes 200-1 to 200-4 in the blockchain method using a blockchain consensus, the digital currency issuance information RI on the issued digital currency is registered in the digital currency registration ledger 240 of each of the bank nodes 200-1 to 200-4 in the blockchain method using a blockchain consensus, and the collateral asset registration information ARI1 or ARI2 for securing the issuance of the digital currency is registered in the collateral asset registration ledger 250 of each of the bank nodes 200-1 to 200-4 in the blockchain method using a blockchain consensus.

When digital currency issuance information RI on the issued digital currency is registered in the digital currency registration ledger 240 of each of the bank nodes 200-1 to 200-4 in the blockchain method using a blockchain consensus, the digital currency ledger 261, 263, ..., or 265 corresponding to a transaction ledger of the digital currency is newly generated and registered in each of the bank nodes 200-1 to 200-4 in a blockchain method (for example, a blockchain consensus is not required).

As described above, when each digital currency is issued by executing each digital currency issuance chaincode, each digital currency ledger corresponding to a transaction ledger of the each digital currency is registered in each of the bank nodes 200-1 to 200-4 in the blockchain method.

For example, when the first bank node 200-1 issues a first digital currency by executing the first chaincode CC1, the first digital currency ledger 261 corresponding to a transaction ledger of the first digital currency is registered in each of the bank nodes 200-1 to 200-4 in the blockchain method.

The first digital currency ledger 261 includes a first event source ledger 261a and a first summary ledger 261b. The first event source ledger 261a is a transaction ledger that records all transactional information made between nodes (or parties) participating in financial transactions in the first digital currency in the form of a blockchain, and the first summary ledger 261b is a transaction ledger that includes a current account balance extracted for each digital ID based on all the transactional information recorded in the first event source ledger 261a.

For example, when the second bank node 200-2 issues a second digital currency by executing the eleventh chaincode CC11, the second digital currency ledger 263 corresponding to a transaction ledger of the second digital currency is registered in each of the bank nodes 200-1 to 200-4 in the blockchain method.

The second digital currency ledger 263 includes a second event source ledger 263a and a second summary ledger 263b. The second event source ledger 263a is a transaction ledger that records all transactional information made between nodes participating in financial transactions in a second digital currency in the form of a blockchain, and the second summary ledger 263b is a transaction ledger that includes a current account balance extracted for each digital ID based on all the transactional information recorded in the second event source ledger 263a.

For example, when the third bank node 200-3 issues a third digital currency by executing a twenty-first chaincode CC21, the third digital currency ledger 265 corresponding to a transaction ledger of the third digital currency is registered in each of the bank nodes 200-1 to 200-4 in the blockchain method.

The third digital currency ledger 265 includes a third event source ledger 265a and a third summary ledger 265b. The third event source ledger 265a is a transaction ledger that records all transactional information made between nodes participating in financial transactions in a third digital currency in the form of a blockchain, and the third summary ledger 265b is a transaction ledger that includes a current account balance extracted for each digital ID based on all the transactional information recorded in the third event source ledger 265a.

Referring to FIG. 9, an event source ledger (ESL, for example, any one of the event source ledgers 261a, 263a, ..., and 265a) includes a digital currency ID for identifying a specific digital currency, a digital ID of a remitter, a digital ID of a recipient, a token to be remitted, and an electronic signature of the remitter.

It is assumed that a first mobile node 300-1 (this is also referred to as a remittance node or a remitter) remits a certain amount of tokens indicated in a first digital currency to a second mobile node 300-2 (this is also referred to as a receipt node or a recipient) using the first digital currency issued by the first bank node 200-1.

Token refers to electronic money, digital currencies, cryptocurrencies, virtual currencies, or digital assets, but the present invention is not limited thereto.

The first event source ledger (ESL, that is, 261a) included in the first digital currency ledger 261 includes a digital currency ID DCID1 for identifying a first digital currency issued by executing the first chaincode CC1, a digital ID S_DIDa of the first mobile node 300-1, a digital ID R_DIDa of the second mobile node 300-2, a remittance token T-AMTa, and an electronic signature Sign_S_DIDa of a user of the first mobile node 300-1.

Referring to FIGS. 1, 2, and 9, processes for remitting, by the first mobile node 300-1 corresponding to a remitter, a token represented in a first digital currency to the second mobile node 300-2 corresponding to a recipient are as follows.

It is assumed that each of the mobile nodes 300-1 and 300-2 receives a second chaincode Chaincode_X=CC2 for financial transactions in a first digital currency downloaded from the chaincode registration ledger 220 of the first bank node 200 or 200-1, digital currency issuance information RI of the first digital currency downloaded from the digital currency registration ledger 240 of the first bank node 200 or 200-1, and the first summary ledger 261b included in the first digital currency ledger 261 of the first bank node 200 or 200-1.

FIG. 10 shows a summary ledger included in each bank node and a specific mobile node. Referring to FIG. 10, the summary ledger 261b, 263b, ..., or 265b (collectively referred to as SL) includes an account balance BAL1 of a first user USER1 corresponding to a digital ID (for example, DIDm1) registered in the identity ledger 210, an electronic signature Sign_BAL1_BN of a bank node that has verified the account balance BAL1 (or has generated a summary ledger SL, 261b, 263b, ..., or 265b), an account balance BAL2 of a second user USER2 corresponding to a digital ID (for example, DIDm2) registered in the identity ledger 210, and an electronic signature Sign_BAL2_BN of a bank node that has verified the account balance BAL2 (or has generated a summary ledger SL, 261b, 263b, ..., or 265b).

The first mobile node 300-1 confirms or checks the account balance BAL1 of the first mobile node 300-1 and the account balance BAL2 of the second mobile node 300-2 from the first summary ledger (SL, or 261b).

The first mobile node 300-1 corresponding to the first user USER1 generates a transaction for transmitting a token T_AMTa expressed in a first digital currency to the second mobile node 300-2 corresponding to the second user USER2, electronically signs the transaction, and publishes the electronically-signed transaction in the blockchain network 110. The transaction includes transactional information that includes a digital ID (S_DIDa=USER1) of the first mobile node 300-1, a digital ID (R_DIDa=USER2) of the second mobile node 300-2, and the token T_AMTa.

The first bank node 220-1 that is selected as a node to generate a new block according to a block generator selection protocol in the blockchain network 110 generates next block information including transactional information and transmits a block proposal including the next block information to all the nodes 200-1 to 200-4, 300-1, and 300-2 included in the blockchain network 110.

Each of the nodes 200-1 to 200-4, 300-1, and 300-2 that have received the block proposal checks contents of the block proposal, makes a consent form for the block proposal (or electronically signs the block proposal using its own private key) if there is no abnormality in the contents of the block proposal (or if there is an agreement on the contents of the block proposal), and transmits the block proposal including the consent form (or the electronically-signed block proposal) to the first bank node 220-1.

The first bank node 220-1 generates a next block of a blockchain on the basis of the consent forms received from each of the nodes 200-1 to 200-4, 300-1, and 300-2, updates the first event source ledger 261a and the first summary ledger 261b according to update information (or update details), and publishes the first event source ledger 261a and the first summary ledger 261b in the blockchain network 110.

For example, according to the update information (that is, the remittance token T_AMTa), the first bank node 220-1 decreases the account balance BAL1 of the first mobile node 300-1 corresponding to the first user USER1 by the remittance token T_AMTa, and increases the account balance BAL2 of the second mobile node 300-2 corresponding to the second user USER2 by the remittance token T_AMTa.

The first bank node 220-1 performs electronic signatures Sign_BAL1_BN and Sign_BAL2_BN on the updated account balances BAL1 and BAL2, respectively, and transmits the updated account balances BAL1 and BAL2 including the electronic signatures Sign_BAL1_BN and Sign_BAL2_BN to each of the mobile nodes 300-1 and 300-2. For example, the electronic signatures Sign_BAL1_BN and Sign_BAL2_BN may be the same electronic signature.

Each of the mobile nodes 300-1 and 300-2 updates the first summary ledger 261b included therein according to the updated account balance BAL1 and BAL2.

According to another embodiment, the first bank node 200-1 generates a check point and publishes a proposal on whether to accept the check point in the bank nodes 200-1 to 200-4.

Each of the bank nodes 200-1 to 200-4 receives the proposal on whether to accept the check point and publishes whether to agree to the proposal. When a proposal in agreement of a majority of the bank nodes 200-1 to 200-4 is adopted, the adopted check point is stored in a genesis block of the digital currency ledger 261, 263, ..., or 265 (or updates a previous check point with the adopted check point). At this time, an account balance for each digital ID is recorded in the genesis block. Thereafter, each of the bank nodes 200-1 to 200-4 deletes data in a blockchain before the check point, and a pointer of a block next to the genesis block points to the check point.

As described referring to FIG. 10, the first summary ledger SL or 261b includes current account balances BAL1 and BAL2 for each of the users USER1 and USER2.

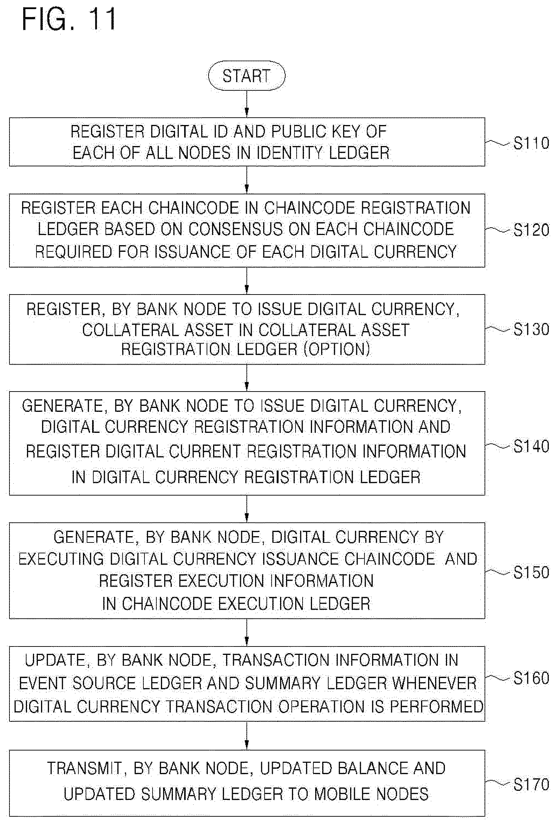

FIG. 11 is a flowchart for describing an operation of the blockchain system shown in FIG. 1. Referring to FIGS. 1 to 11, each of the bank nodes 200-1 to 200-4 registers digital IDs DID1 to DID4, DIDm1, and DIDm2 and public keys PuK1 to PuK4, PuKml, and PuKm2 of each of all nodes 200-1 to 200-4, 300-1, and 300-2 included in a blockchain network 110 in an identity ledger 210 included therein in the blockchain method using a blockchain consensus (S110).

As described above, since the digital IDs DID1 to DID4, DIDm1, and DIDm2 of each of the nodes 200-1 to 200-4, 300-1, and 300-2 refer to identity information for uniquely identifying each of the nodes 200-1 to 200-4, 300-1, and 300-2, the identity of each of parties (for example, a remitter, a recipient, and an intermediary bank) can be checked when a digital currency is processed (for example, remittance, financial transactions, or payment).

Each of the bank nodes 200-1 to 200-4 registers each of the chaincodes CC1 to CC40 in the chaincode registration ledger 220 of each of the bank nodes 200-1 to 200-4 in the blockchain method using a blockchain consensus through a consensus on each of the chaincodes CC1 to CC40 (S120). Each of the chaincodes CC1 to CC40 may be a digital currency issuance chaincode that issues a digital currency or a digital currency transaction chaincode that processes a digital currency.

When any one (for example, 200-1) of the bank nodes 200-1 to 200-4 issues a specific digital currency (for example, the first digital currency) by executing any one (for example, the first chaincode CC1) of the chaincodes CC1 to CC40 registered in the chaincode registration ledger 220, the bank node 200-1 may provide a collateral asset to secure the issuance of the first digital currency.

When a collateral asset is provided by the bank node 200-1, collateral asset registration information ARI1 or ARI2 on the collateral asset is registered in the collateral asset registration ledger 250 of each of the bank nodes 200-1 to 200-4 in the blockchain method using a blockchain consensus (S130). According to embodiments, a step S130 of providing a collateral asset may be executed or may not be executed.

When the bank node 200-1 issues a first digital currency by executing the first chaincode CC1, digital currency issuance information RI related to the issuance of the first digital currency is registered in the digital currency registration ledger 240 of each of the bank nodes 200-1 to 200-4 in the blockchain method using a blockchain consensus (S140).

When the first digital currency is issued by the first chaincode CC1 executed by the bank node 200-1, the chaincode execution information EI1 or EI2 generated according to a result of executing the first chaincode CC1 is registered in the chaincode execution ledger 230 of each of the bank nodes 200-1 to 200-4 in the blockchain method using a blockchain consensus (S150).

According to embodiments, the steps (S140 and S150) may be executed in parallel, and the step (S150) of registering chaincode execution information in the chaincode execution ledger 230 may be executed prior to the step (S140) of registering digital currency issuance information in the digital currency registration ledger 240.

It is assumed that each of the mobile nodes 300-1 and 300-2 receives a digital currency transaction chaincode (for example, the second chaincode CC2) for processing the first digital currency downloaded from the chaincode registration ledger 220, digital currency issuance information (RI, or the digital currency information 241) related to the first digital currency downloaded from the digital currency registration ledger 240, and the first summary ledger 261b including a current account balance.

Whenever a digital currency transaction operation using the second chaincode CC2 for processing the first digital currency between the bank node 200-1 and the mobile nodes 300-1 and 300-2, that is, a first digital currency transaction chaincode, is performed, all transactional information (or all transaction data) is recorded (or updated) in the first event source ledger 261a of each of the bank nodes 200-1 to 200-4 in the blockchain method using a blockchain consensus (S160), and specific transactional information (for example, a current account balance) among all the transactional information is recorded (or updated) in the first summary ledger 261b (S160).

As described above, the bank node 200-1 transmits the updated account balance or the updated summary ledger to the mobile nodes 300-1 and 300-2 (S170). Accordingly, each of the mobile nodes 300-1 and 300-2 updates the contents of the first summary ledger 261b according to the updated account balance or updates a previous first summary ledger 261b with the updated summary ledger.

Since each of bank nodes included in the blockchain system according to exemplary embodiments of the present invention includes an identity ledger that stores a digital ID linked to identity information for identifying an identity of each of transaction parties, the identity of each of the transaction parties can be identified. As a result, the blockchain system has an effect of preventing illegal money laundering.

According to the exemplary embodiments of the present invention, since each of bank nodes included in a blockchain system that provides a financial transaction service includes an identity ledger that stores public keys of all nodes included in a blockchain network, even though any one of the bank nodes fails, each of users using the financial transaction service can keep using the financial transaction service using each of the public keys stored in at least one of the remaining bank nodes. Accordingly, the financial transaction service provided by the blockchain system cannot be interrupted.

Each of bank nodes included in the blockchain system according to the exemplary embodiments of the present invention can dynamically generate each of corresponding digital currencies.

According to the exemplary embodiments of the present invention, bank nodes, each of which can dynamically generate a digital currency and manage a transaction ledger, can generate a summary ledger that records an account balance of a digital currency for each identity (or for each digital ID) extracted from the transaction ledger to enable mobile nodes to perform financial transactions in a digital currency through the summary ledger.

Although the present invention has been described with reference to exemplary embodiments shown in drawings, these are only exemplary, and it will be appreciated by those skilled in the art that various modifications and other embodiments may be made. Accordingly, the scope of the present invention is determined by the appended claims.

## Claims

1. A blockchain system (100) comprising:
bank nodes (200-1, ..., 200-4); and
mobile nodes (300-1, 300-2),
wherein each of the bank nodes (200-1, ..., 200-4) includes an identity ledger (210) that includes a public key (PuK1, ..., PuK4) of each of the bank nodes (200-1, ..., 200-4), a digital ID (DID1, ..., DID4) for identifying an identity of a user of each of the bank nodes (200-1, ..., 200-4), a public key (PuKml, PuKm2) of each of the mobile nodes (300-1, 300-2), and a digital ID (DIDm1, DIDm2) for identifying an identity of each of the mobile nodes (300-1, 300-2).

2. The blockchain system (100) of claim 1,
wherein each of the bank nodes (200-1, ..., 200-4) further includes a chaincode registration ledger (220) in which chaincodes (CC1, ..., CC40) generated by the bank nodes (200-1, ..., 200-4) are registered according to a consensus between the bank nodes (200-1, ..., 200-4) and the mobile nodes (300-1, 300-2),
wherein the chaincodes (CC1, ..., CC40) include:
a digital currency issuance chaincode for issuing a digital currency; and
a digital currency transaction chaincode downloaded to at least one mobile node (300) with which transactions are desired using the digital currency among the mobile nodes (300-1, 300-2).

3. The blockchain system (100) of claim 2,
wherein each of the bank nodes (200-1, ..., 200-4) further includes a chaincode execution ledger (230),
when any one of the bank nodes (200-1, ..., 200-4) executes the digital currency issuance chaincode registered in the chaincode registration ledger (220),
each of the bank nodes (200-1, ..., 200-4) registers chaincode execution information (EI1, EI2), which includes issuance conditions of the first digital currency and a result of execution indicating whether the first digital currency is issued, in the chaincode execution ledger (230) included in each of the bank nodes (200-1, ..., 200-4) in a blockchain method using a blockchain consensus.

4. The blockchain system (100) of claim 3,
wherein the chaincode execution information (EI1, EI2) includes a total issuance amount of the digital currency, a transaction unit of the digital currency, and an ID of the digital currency transaction chaincode.

5. The blockchain system (100) of any one of claims 2 to 4,
wherein each of the bank nodes (200-1, ..., 200-4) further includes a collateral asset registration ledger (250),
when any one of the bank nodes (200-1, ..., 200-4) issues the digital currency by executing the digital currency issuance chaincode registered in the chaincode registration ledger (220),
each of the bank nodes (200-1, ..., 200-4) registers collateral asset registration information (ARI1, ARI2) in the collateral asset registration ledger (250) included in each of the bank nodes (200-1, ..., 200-4) in a blockchain method using a blockchain consensus when the any one bank node generates the collateral asset registration information (ARI1, ARI2) on a collateral asset for securing an issuance of the digital currency.

6. The blockchain system (100) of claim 5,
wherein the collateral asset registration information (ARI1, ARI2) includes a type of the collateral asset, an amount of the collateral asset, and information on a collateral asset storage bank in which the collateral asset is stored.

7. The blockchain system (100) of any one of claims 2 to 6,
wherein each of the bank nodes (200-1, ..., 200-4) further includes a digital currency registration ledger (240),
any one of the bank nodes (200-1, ..., 200-4) issues the digital currency by executing the digital currency issuance chaincode registered in the chaincode registration ledger (220), generates digital currency issuance information (RI) including an issuance amount and transaction conditions of the issued digital currency,
each of the bank nodes (200-1, ..., 200-4) registers the digital currency issuance information (RI) in the digital currency registration ledger (240) included in each of the bank nodes (200-1, ..., 200-4) in a blockchain method using a blockchain consensus.

8. The blockchain system (100) of claim 7,
wherein the digital currency issuance information (RI) includes an ID of the digital currency, a total issuance amount of the digital currency, a transaction unit of the digital currency, and an ID of the digital currency transaction chaincode.

9. The blockchain system (100) of claim 7 or 8,
wherein the digital currency issuance information (RI) is downloaded to the at least one mobile node.

10. The blockchain system (100) of any one of claims 1 to 9,
wherein each of the bank nodes (200-1, ..., 200-4) further includes digital currency ledgers (261, 263, 265),
a first digital currency ledger (261) among the digital currency ledgers (261, 263, 265) stores transactional information made between transaction parties using a first digital currency among different digital currencies,
each of the bank nodes (200-1, ..., 200-4) registers the transactional information in a digital currency registration ledger (240) included in each of the bank nodes (200-1, ..., 200-4) in a blockchain method using a blockchain consensus, and
wherein the transaction parties include at least one of the bank nodes (200-1, ..., 200-4) and at least one of the mobile nodes (300-1, 300-2).

11. The blockchain system (100) of claim 10,
wherein the first digital currency ledger (261) includes:
an event source ledger (261a) that stores all of the transactional information made between the transaction parties in a form of a blockchain; and
a summary ledger (261b) that stores some transactional information among all of the transactional information made between the transaction parties,
wherein, preferably, the some transactional information or the summary ledger (261b) is downloaded to the at least one mobile node.

12. An operation method of a blockchain system (100) that includes a blockchain network (110) including bank nodes (200-1, ..., 200-4) and mobile nodes (300-1, 300-2), comprising:
publishing, by each of the bank nodes (200-1, ..., 200-4), a public key (PuK1, ..., PuK4) of each of the bank nodes (200-1, ..., 200-4) and a digital ID (DID1, ..., DID4) for identifying an identity of each of the bank nodes (200-1, ..., 200-4) in the blockchain network (110);
publishing, by each of the mobile nodes (300-1, 300-2), a public key (PuKml, PuKm2) of each of the mobile nodes (300-1, 300-2) and a digital ID (DIDm1, DIDm2) for identifying an identity of each of the mobile nodes (300-1, 300-2) in the blockchain network (110); and
receiving, by each of the bank nodes (200-1, ..., 200-4), the public key (PuK1, ..., PuK4) of each of the bank nodes (200-1, ..., 200-4), the digital ID (DID1, ..., DID4) for identifying the identity of each of the bank nodes (200-1, ..., 200-4), the public key (PuKml, PuKm2) of each of the mobile nodes (300-1, 300-2), and the digital ID (DIDm1, DIDm2) for identifying the identity of each of the mobile nodes (300-1, 300-2) to register the received public keys (PuK1, ..., PuK4, PuKml, PuKm2) and digital IDs (DID1, ..., DID4, DIDm1, DIDm2) in an identity ledger (210) included in each of the bank nodes (200-1, ..., 200-4).

13. The operation method of claim 12, further comprising:
generating, by each of the bank nodes (200-1, ..., 200-4), chaincodes (CC1, ..., CC40) to publish the chaincodes (CC1, ..., CC40) in the blockchain network (110); and
registering, by each of the bank nodes (200-1, ..., 200-4), chaincodes (CC1, ..., CC40) published by each of the bank nodes (200-1, ..., 200-4) in a chaincode registration ledger (220) included in the each of the bank nodes (200-1, ..., 200-4) according to a consensus among the bank nodes (200-1, ..., 200-4) and the mobile nodes (300-1, 300-2),
wherein the chaincodes (CC1, ..., CC40) include:
a digital currency issuance chaincode for issuing a digital currency; and
a digital currency transaction chaincode downloaded to at least one mobile node (300) with which transactions are desired using the digital currency among the mobile nodes (300-1, 300-2).

14. The operation method of claim 12 or 13,
wherein each of the bank nodes (200-1, ..., 200-4) further includes digital currency ledgers (261, 263, 265),
the operation method further comprising storing, by each of the bank nodes (200-1, ..., 200-4), transactional information made between transaction parties using a first digital currency among digital currencies in a first digital currency ledger (261) among the digital currency ledgers (261, 263, 265), and
wherein the transaction parties include at least one of the bank nodes (200-1, ..., 200-4) and at least one of the mobile nodes (300-1, 300-2).

15. The operation method of claim 14,
wherein the first digital currency ledger (261) includes an event source ledger (261a) and a summary ledger (261b), and
the storing transactional information in the first digital currency ledger (261) including:
storing, by each of the bank nodes (200-1, ..., 200-4), all of the transactional information made between the transaction parties in the event source ledger (261a) in a form of a blockchain; and
extracting some transactional information from all of the transactional information made between the transaction parties to store the extracted transactional information in the summary ledger (261b).
